Europäisches Patentamt

European Patent Office

Office européen des brevets

(19)

(11) EP 0 708 318 A1

(12) EUROPEAN PATENT APPLICATION

(43) Date of publication:
24.04.1996 Bulletin 1996/17

(51) Int Cl.⁶: G01J 5/06

(21) Application number: 95480143.7

(22) Date of filing: 22.09.1995

(84) Designated Contracting States:
DE FR GB

(30) Priority: 17.10.1994 US 324296

(71) Applicant: International Business Machines
Corporation
Armonk, N.Y. 10504 (US)

(72) Inventors:
• Rausch, Werner Alois
  Stormville, New York 12582 (US)
• Singh, Jyothi
  Hopewell Junction, N.Y. 12533 (US)

(74) Representative: Lattard, Nicole
Compagnie IBM France
Département de Propriété Intellectuelle
F-06610 La Gaude (FR)

(54) **Radiance measurement by angular filtering for use in temperature determination of radiant object**

(57) A system and methodology for obtaining temperature of a radiant object, such as a wafer in a rapid thermal processing chamber, employs a temperature measurement to control a supply of power to heating elements of the chamber, thereby to attain a desired temperature. The heating elements provide thermal radiation in a spectral band which overlaps a spectral band in which radiance is to be measured. The temperature of the radiant object is derived from a measure of the radiance and a measure of the emissivity of the object. Improved accuracy of the temperature measurement is obtained by measurement of the radiance of the object through an elongated angular filtering assembly, such as a set of baffles in one embodiment of the invention, wherein reflected rays from heating elements are trapped by the baffle assembly and, therefore, do not present any significant error in the measurement of the radiance. The radiance is measured via a filter which selects a specific wavelength of interest, and the emissivity measurement is made by use of a pulsed laser beam operative in the same wavelength, to produce incident and reflected beams of radiation from the object. The emissivity is calculated from the ratio of reflected power to the incident power. The reflected power is measured via a receiver tuned to a chopping frequency of the laser beam, thereby to exclude any background radiation within the band of interest from the emissivity calculation.

FIG. 1

## Description

## BACKGROUND OF THE INVENTION

This invention relates to non-contact in-situ measurement of radiance of an object in a radiative environment, such as a semiconductor wafer in a rapid thermal processing (RTP) chamber, and the determination of temperature of the object by use of the radiance measurement plus a non-contact in-situ measurement of emissivity of the object. In the radiance measurement, interfering background radiation is essentially eliminated by use of spatial and angular filtering.

In manufacturing processes, the heating of a workpiece is employed often in one or more of the manufacturing steps in order to obtain a desired end product. This is particularly true in the case of manufacture of semiconductor circuits and other semiconductor products wherein a wafer is treated by various steps of deposition, etching, doping and cleaning to construct the complex configuration of circuit components on the wafer. During various stages of the manufacture, the temperature of the wafer must be elevated, for example, to temperatures in the range of 600 - 1200 degrees Centigrade. It is the practice to place the wafers in a furnace to obtain the desired temperature. More recently, the use of RTP apparatus has come into use as a more attractive alternative to furnace processing of wafers because the RTP provides for a rapid, single wafer processing with advantages of better control and lower manufacturing costs. However, especially in view of the short duration of many RTP steps, it becomes increasingly important to measure and to control the temperature closely. Viewing of radiation of the wafer, or other workpiece, without physically contacting the wafer is advantageous for in-situ temperature measurement. Such a temperature measurement may be done at several discrete points on a wafer to obtain data of any nonuniformity in temperature, or temperature profile, across the wafer.

Historically, pyrometry has been the most widely applied method of RTP temperature measurement because of its inherent simplicity, non-contact nature, and compatibility with various types of manufacturing apparatus or tools. However, there is a problem in the use of pyrometry in the case of chambers or other environments heated by lamps or other sources of radiation in that there is a presence of intense background radiation which acts as a major source of interference to measurement of the wafer radiance. One way of avoiding the problem is to measure the wafer radiance at a wavelength longer than a long wavelength cutoff of the quartz used in construction of the chamber. Thereby, the quartz filters out the lamp radiation so as to essentially eliminate the interference of the lamp radiation. A typical value of the long wavelength cutoff is 4.5 microns. However, such a measurement procedure at the longer wavelength takes away several advantages which are present with measurements in a shorter wavelength range, typically 0.9 - 4.5 microns, wherein the radiation from a heating lamp is intense.

With respect to advantages of radiance and emissivity measurements at the shorter wavelength, this being directly within the spectral band of infrared radiation used to heat the wafer, it is noted that at wavelengths less than one micron, the emissivity of silicon, a material often used in the wafers, is not a strong function of temperature. Furthermore, for a given error in emissivity measurement, the error in temperature measured is proportionately smaller for shorter wavelengths. Also, there is less interference from other hot objects such as the walls of the heating chamber. In addition, the emissivity of quartz, typically used in the construction of the chamber and/or a window thereof, is very small at wavelengths less than about two microns. It is noted also that detectors of radiation at wavelengths less than approximately one micron are more sensitive than radiation detectors operative at longer wavelengths, thereby to afford a more sensitive detection at room temperature.

Emissivity data of a radiating object is employed advantageously for determination of temperature. There are several well-known and severe problems with pyrometric temperature measurements due to a variation in the emissivity of the object, such variation degrading the accuracy and repeatability of pyrometric temperature measurements by introducing errors of as much as tens of degrees centigrade. In general, the emissivity of the wafer is not constant during a manufacturing process because the emissivity is a function of a number of variables including wafer temperature, surface film thicknesses, films on the heating chamber wall which alter the chamber reflectivity, backside roughness of the wafer, and process history. Therefore, it is necessary to monitor the emissivity of wafers in situ and in real time, and in a non-contact manner to insure correct temperature measurement.

The use of other forms of measurements wherein the object must be removed from its environment, or by use of monitor wafers to provide a substitutional form of measurement, or the use of theoretical calculations to estimate emissivity do not provide the desired amount of accuracy because of variations in the manufacturing process and in the wafer itself.

As is well known in the measurement of emissivity, in the general case, the emissivity of an object depends both on the reflectance and the transmittance of the object to incident radiation. However, in the situation wherein the object is opaque, and hence there is zero transmittance, it is known from Kirchoff's Law that the emissivity can be determined fully from a reflectance measurement alone. The opacity may be a function of wavelength, and may be induced by temperature or by doping. For the case of highly doped semiconductor wafers, or for measurement at a wavelength less than approximately one micron, emissivity measurement is possible from reflectance alone for objects at room temperature and above. However, for emissivity measurements conducted at longer wavelengths or for lower doping, such as at a wavelength of three microns at normal doping level, and in the absence of films on the wafer, a determination of emissivity based solely on a reflectance measurement can be accomplished only at temperatures higher than approximately 700 degrees centigrade.

## SUMMARY OF THE INVENTION

The aforementioned problems are overcome and other advantages are provided by a system and methodology of the invention providing for in-situ noncontact measurement of radiance of an object in a radiative environment, and the use of the radiance measurement in conjunction with an in-situ noncontact measurement of emissivity for determination of temperature in real time to be used for control of temperature of the object. The emissivity of the object can be determined by any suitable method, e.g., is calculated from a reflectance measurement performed at the same radiation wavelength as the radiance measurement. Typically, the object is a semiconductor wafer, and the radiative environment is provided by an RTP chamber having walls and/or windows of quartz with lamps emitting radiation to heat the wafer. The radiance measurement is attained at radiation wavelengths shorter than the long wavelength cutoff of the quartz, thereby attaining the aforementioned advantages of measurement at the shorter wavelengths.

A feature of the invention is the provision of the radiance measurement at radiation wavelengths shorter than the long wavelength cutoff of the quartz by use of spatial and angular filtering of the radiation, thereby attaining the aforementioned advantages of measurement at the shorter wavelengths. The angular filtering essentially eliminates interference of lamp radiation. The angular filtering is accomplished, in one embodiment of the invention, by viewing the object through a baffle assembly which essentially excludes interfering radiation from heat lamps of the RTP chamber. The baffle assembly has a plurality of baffle plates with apertures arranged along an optical path. The apertures have diameters orders of magnitude smaller than a length of the baffle assembly along the optical path, thereby to provide a geometry for excluding rays of radiation which are angled to the optical path.

The effectiveness of the baffle assembly may be explained by reference to the geometry of a typical RTP heating apparatus wherein, by way of example, an array of heat lamps is disposed between the quartz chamber and smooth flat reflecting mirrors which reflect radiation from the lamps into the quartz chamber for heating the object wafer to a desired temperature. A viewing aperture is located within one of the mirrors at a location equidistant to neighboring lamps for viewing the wafer along an optical path which does not intercept one of the lamps. Thereby, upon aligning a series of baffles of the baffle assembly with the aperture and along the optical viewing path to the wafer, radiation emanating from the wafer propagates through the baffle apertures to be incident upon a radiation detector for measurement of the radiance.

By way of example in the case of a well-known configuration of RTP chamber, the foregoing viewing path is in a direction normal to a reflecting surface of the wafer. Essentially only those rays which are normal to the wafer surface, resulting only from the radiance of the object, are incident upon a detector of the radiance. The scattered rays emanating from the lamps are excluded by the baffles from impinging on the radiance detector. Thereby, an accurate measurement of the radiance is attained. In the general case, the radiance can be measured also along an optical path inclined to a flat surface element of the object, and even via an optical path intercepting a curved surface element of the object, provided that the path does not intercept a lamp. By way of further embodiment, the series of baffles can be replaced with, or used in conjunction with, an iris positioned with a lens at a distance from the viewing aperture.

One embodiment for measurement of wafer emissivity through reflectance measurements takes advantage of the geometry of the RTP heating apparatus by use of transmitted and reflected beams of amplitude modulated (or chopped) radiation. The two beams propagate at nearly normal angles to the object surface by means of the viewing aperture in one of the foregoing mirrors. In a preferred embodiment of the invention, separate apertures are employed in a single one of the mirrors for the reflectance and radiance measurements.

It is noted that the foregoing system and methodology accomplishes the radiance measurement without providing for any physical contact of the measuring instruments with the object, and, furthermore, allows the measurement to take place while the object remains in its place within the chamber. Furthermore, the radiance and the reflectance measurements are obtained by a direct viewing of the object itself so as to obviate the need for use of monitor wafers to obtain an estimate of the temperature measurement.

## BRIEF DESCRIPTION OF THE DRAWINGS

The aforementioned aspects and other features of the invention are explained in the following description, taken in connection with the accompanying drawing figures wherein:

Fig. 1 is a diagram of the measurement system of the invention employed for measuring the temperature of a wafer shown within an RTP chamber; and

Fig. 2 is a diagram of electrooptic equipment employed in reflectance measurement apparatus in the system of Fig. 1.

Identically labeled elements appearing in different ones of the figures refer to the same element in the different figures.

DETAILED DESCRIPTION

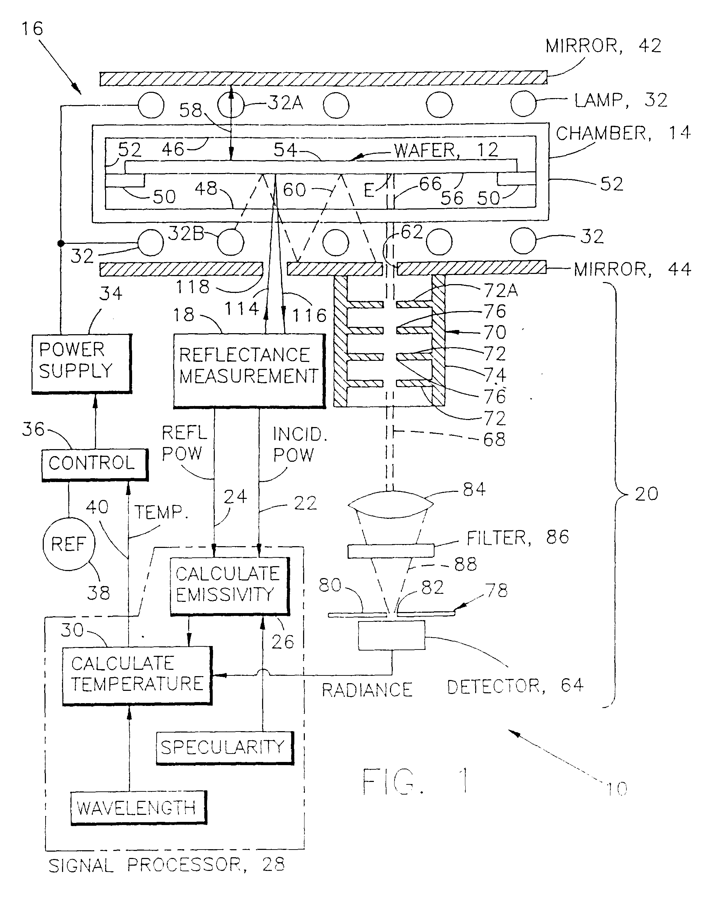

Fig. 1 shows a system 10, operative in accordance with the invention, for providing concurrent measurements of reflectance and radiance of a semiconductor wafer 12 enclosed within a quartz chamber 14 of an RTP heating apparatus 16. It is to be understood that the configuration of RTP apparatus described herein is provided by way of example to facilitate description of the invention, and that the invention may be practiced with heating apparatus of other configurations and with objects of various configurations other than a flat wafer. The measurement of reflectance is accomplished by a reflectance measurement unit 18, and the radiance is measured by radiance measurement apparatus 20. Output signals of the reflectance measurement unit, namely, incident power on line 22 and reflected power on line 24, are applied to an emissivity calculation unit 26 of a signal processor 28 for calculation of emissivity of the wafer 12. The emissivity provided by the unit 26 and the radiance provided by the radiance measurement apparatus 20 are applied to a temperature calculation unit 30, also located within the signal processor 28, for determination of the temperature of the wafer 12. The heating apparatus 16 comprises a set of heating lamps 32 which may be sections of a heating filament, and a power supply 34 for energizing the lamps 32 with electric current.

The amplitude of the current outputted by the supply 34 is controlled by a power-supply controller 36 responsive to a reference temperature setting 38 and to a measured temperature signal outputted on line 40 by the temperature calculation unit 30. The controller 36 enables the system 10 to utilize the temperature measurement to control the temperature of the wafer 12 by operation of the power supply 34. It is to be noted that the measurement and control of the temperature of the wafer 12 is provided by way of example in the use of the invention for operation of the system 10 and that, if desired, the radiance measurement may be used for some other purpose.

In the foregoing example, the invention is practiced with a workpiece having a flat surface, as does the wafer 12, and by use of a transparent infrared spectral region of the quartz walls of the chamber 14 in conjunction with utilization of the reflecting surfaces of mirrors such as mirrors 42 and 44 of the RTP heating apparatus 16. The wafer 12 has two planar opposed surfaces which are parallel to two planar opposed interior surfaces of the mirrors 42 and 44. Also, top and bottom walls 46 and 48 of the chamber 14 are parallel to the mirrors 42 and 44. An upper row of the lamps 32 is located between the mirror 42 and the top wall 46 of the chamber 14, a lower row of the lamps 32 being located between the mirror 44 and the bottom wall 48 of the chamber 14. The wafer 12 is held by supports 50 extending inwardly from sidewalls 52 of the chamber 14, the sidewalls 52 being substantially perpendicular to the top and bottom walls 46 and 48.

The foregoing geometry of the parallelism of the wafer surfaces, the chamber walls and the mirrors provides for distribution of reflected rays of radiation from the lamps 32 such that all of the rays are angled relative to the foregoing parallel surfaces except for rays emanating from the lamps 32 in directions normal or near-normal to the reflecting surfaces of the mirrors 42 and 44. A near-normal condition may occur as a result of refraction of lamp radiation through a lamp envelope or minor misalignment of nominally parallel reflecting surfaces. One such normal ray 58 is shown by way of example for one of the lamps, namely the lamp 32A. Radiation in the ray 58 simply bounces back and forth by multiple reflections primarily between the mirror 42 and the wafer upper surface 54 although there are minor components of the multiple reflections between the mirror 42 and an intermediate wall of the quartz chamber 14 or the wafer upper surface 54 and the intermediate wall. Some other ray, such as the ray 60 which is emitted from the lamp 32B in a direction angled to the mirror 44 at any arbitrary angle (but not normal to the mirror 44), undergoes a series of reflections between the wafer lower surface 56 and the mirror 44 while maintaining the same angles of incidence and reflection from the mirror 44 during successive legs of the path of reflections. From this geometric construction, as shown in Fig. 1, it is apparent that an angled ray emitted from a lamp 32 continues to propagate through successive reflections with an orientation which is angled relative to the mirror 44 and/or the mirror 42. However, a ray such as the ray 58 which is emitted in a direction substantially normal to the mirror 42 and/or the mirror 44 does not propagate towards the right or the left, as viewed in Fig. 1, but remains at about the same lateral position. Furthermore, in general the ray 58 or any other ray emitted by any other one of the lamps 32 in the normal direction remains substantially at the location of the lamp and does not propagate to the right or the left. When the wafer surface is rough relative to the wavelength of light at which the radiance measurement is made, the reflections are not as would be expected for a smooth surface. In this case, the speration of radiation emitted by the wafer substantially normal to its surface and the radiation emitted by the lamps at the same wavelength but reflected by the wafer is more difficult to accomplish. Typically this would degrade the filtering performance of a given angular filter, but the filtering can be accomplished with a high quality spatial filter (e.g., longer path lengths or smaller apertures).

The foregoing geometry in the orientations of the reflecting rays is utilized to advantage, in accordance with the invention, by the radiance measurement apparatus 20 in measuring the radiance of the wafer 12. The mirror 44 has an aperture 62 which serves as a window by which a detector 64 of the radiance apparatus 20 views rays 66 emanating from the wafer 12 for measurement of the wafer radiance. The detector 64 is positioned relative to the aperture 62 such that the rays 66 propagate along an optical path 68 which is normal or near-normal to the lower wafer surface 56. The optical path 68 begins at an elemental surface region E on the lower surface 56 of the wafer 12, and the measurement of radiance is based on radiation emitted from the elemental surface region E and propagating normally to the lower surface 56 towards the detector 64. The rays of radiation employed in the measurement of radiance are to be distinguished from the rays of radiation emitted by the lamps 32 and reflected by the mirrors 42 and 44 along rays such as the aforementioned normal ray 58 and the angled ray 60. In view of the foregoing analysis of the normal ray 58 and the angled ray 60, it is apparent that, at the elemental region E, there will be reflected rays which are angled relative to the optical path 68, but that there would be no substantial component of reflected rays normal to the lower wafer surface 56.

The avoidance of the normal reflected rays at the elemental region E is accomplished by the locating of the aperture 62 at a site within the mirror 44 wherein the optical path 68 bypasses a lamp 32 so as to avoid reflectance of a light ray of the lamp 32 along the path 68 to the detector 64. The bypassing of a lamp 32 by the path 68 applies to all embodiments of the invention including the situation of a wafer surface element which may have a curvature. In the embodiment of Fig. 1, the aperture 62 is located substantially equidistant between two neighboring ones of the lamps 32. This greatly enhances the accuracy of the radiance measurement by avoidance of interfering rays of reflected radiation along the optical path 68 which would cause an error in the radiance measurement.

In the operation of the radiance measurement apparatus 20, reflected rays which may be angled slightly relative to the optical path 68 are inhibited from reaching the detector 64 by the use of a baffle assembly 70 comprising a set of baffle plates 72 positioned, by any suitable means such as a tubular frame 74, in a direction perpendicular to the optical path 68 and having apertures 76 aligned with the optical path 68 to allow the rays 66 from the elemental region E to propagate to the detector 64. The apertures 76 may have the same size and configuration, their size generally being smaller than the aperture 62 in the mirror 44. An optional iris 78 is located along the optical path 68 directly in front of the detector 64, and is constructed as a plate 80 with an aperture 82 centered on the optical path 68. The aperture 82 may have the same configuration as an aperture 76 of the baffle assembly 70, but has a much smaller size than the aperture 76. Preferably, the surfaces of the baffle plates 72 and the interior surface of the optional tubular frame 74 are blackened, anti-reflective (AR) coated, or otherwise rendered substantially non-reflective, so as to facilitate a trapping of any reflected rays which may pass from within the heating apparatus 16 via the aperture 62 into the baffle assembly 70.

Both the baffle assembly 70 and the iris 78 constitute portions of the radiance measurement apparatus 20, the apparatus 20 further comprising a lens 84 and a filter 86 which are located along the optical path 68. The lens 84 serves to focus the rays 56 along a front face of the detector 64 with a cone 88 of focused rays passing through the aperture 82. The iris 78 provides a similar function in trapping any reflected rays which, by virtue of only a slight angularity relative to the optical path 68, may have propagated past all of the plates 72 to the lens 84, but lie outside of the cone 88 of rays. In this respect, since the iris 78 performs a similar function to the baffle plates 72, the iris plate 80 may also be regarded as a baffle of the assembly 70.

The filter 86 has a narrow passband centered at the wavelength of the radiation to be employed in conductance of the radiance measurement. Since both the radiance and the emissivity measurements, as well as the subsequent calculation of wafer temperature, are dependent on the wavelength of the radiation, the filter 86 ensures that the appropriate wavelength of radiation is considered in the calculation of the wafer temperature by the temperature calculation unit 30.

The foregoing operation of the baffle assembly 70 in conjunction with the lens 84 and the iris 78 in inhibiting the passage of the angled reflected rays may be referred to as angular filtering. The angular filtering provides for a viewing by the detector 64 of a single point on the wafer 12, rather than a plurality of points, and thereby excludes from the radiance measurement background radiation which might have been reflected from the wafer 12. By way of example in the construction of a preferred embodiment of the invention, the optical path length from the aperture 62 of the mirror 44 to the aperture 82 of the iris 78 is approximately 4.25 feet, the widths of the apertures 76 are approximately 2 millimeters, while the width of the iris 82 is less than one millimeter, preferably approximately 0.5 millimeters.

It is noted that the apertures 62, 76, and 82 may have any desired shape, such as a circular shape, a square shape, or a rectangular shape. Also, it is noted that the four baffle plates 72 are shown in Fig. 1 by way of example, and that some other number of baffle plates, such as two or three or eight plates, by way of example, may be employed if desired. Furthermore, with respect to the locating of the baffle elements, the top baffle plate 72A is located as close as practical to the mirror 44 while the bottom baffle element, namely the iris plate 80, is located as close as practical to the detector 64 to provide for a spatial relationship among the baffle elements which optimizes the angular filtering. By way of alternative embodiments of the apparatus 20, it is noted that use of only the lens 84 and the iris 78 may provide adequate angular filtering, and that the use of only the baffle plates 72 without the iris 78 may provide adequate angular filtering. Adequate angular filtering may be provided also by use of only the top baffle plate 72A in conjunction with the lens 84 and the iris 78, by way of example. Each of these embodiments provides a narrow acceptance angle by which the detector 64 views radiation from the wafer 12.

With respect to the cross-sectional dimensions of the aperture 62 of the mirror 44, it is noted that as a practical matter, commercially available heating apparatus are provided generally with a viewing port such as the aperture 62. The locating of the top baffle plate 72A immediately adjacent the aperture 62 of the mirror 44 is most effective in limiting the amount of interfering reflected rays from the radiance measurement.

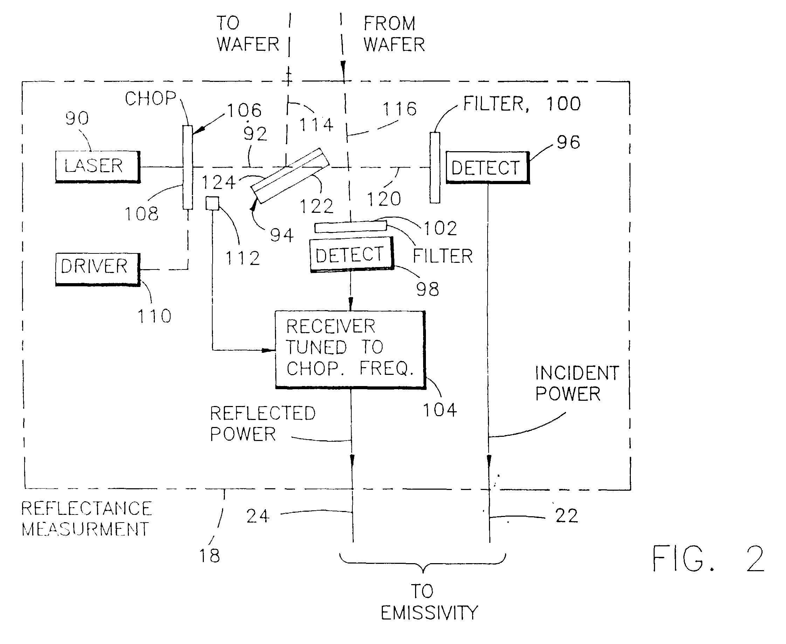

With reference to Fig. 2, one embodiment of the reflectance measurement unit 18 is operative with pulses of laser light wherein the pulses may be produced by use of a pulsed laser or by use of a cw (continuous wave) laser operative with a light modulator to provide the light pulses. The wavelength of the laser is selected to be the same for mesurement of radiance. The latter form of laser 90 is used in the embodiment of Fig. 2, by way of example, to produce a beam 92 of infrared radiation. In addition to the laser 90, the reflectance measurement unit 18 further comprises a partially-reflecting mirror 94, two detectors 96 and 98, two filters 100 and 102, and a receiver 104. The beam 92, while traveling to the mirror 94 passes through a light modulator in the form of an optical chopper 106. Optical choppers are well known in the art. Such an optical chopper 106 may be constructed as disk 108 having opaque and transparent portions, and rotated by a driver 110 to place alternately the opaque and transparent portions of the disk 108 within the path of the beam 92 to produce light pulses. The chopper 106 further comprises a detector 112 of the light pulses to signal the receiver 104 of the presence of each light pulse of the beam 92.

In operation, the beam 92 is split by the partially transmitting mirror 94 with a portion of the light being reflected as a ray 114 to the wafer 12 (Fig. 1), optical energy within the ray 114 being reflected by the wafer 12 along a ray 116 through the filter 102 to the detector 98. The rays 114 and 116 have access to the wafer 12 via an aperture 118 (Fig. 1) in the mirror 44. The rays 114 and 116 are preferably inclined slightly to each other so that the path of the ray 116 bypasses the mirror 94 thereby to minimize further loss of signal strength in the ray 116 due to passage through the mirror 94. A possible value for the wavelength of the laser radiation is 0.8 to 1.0 microns. The nonreflected portion of the beam 92 propagates through the mirror 94 and the filter 100 as ray 120 to impinge upon the detector 96. The filters 100 and 102 have the same spectral passband as the filter 86 (Fig. 1), the passband being centered at the wavelength of the output radiation of the laser 90 to provide measurement of emissivity at the same wavelength as the radiance measurement.

The detector 96 outputs a signal on line 22 proportional to the power outputted by the laser 90, this being a measure of the power incident upon the wafer 12 via the ray 114. The detector 98 outputs a signal to the receiver 104 proportional to the power reflected from the wafer 12 via the ray 116. The receiver 104 is tuned to the chopping frequency, or pulse repetition frequency of the radiation pulses in the beam 92, and is synchronized with the pulse train by the signal outputted by the chopping detector 112. This enables the receiver 104 to respond only to the laser light pulses without interference from any steady background radiation which may happen to be present within the passband of the filter 102. The receiver 104 outputs on line 24 a signal representing power reflected from the wafer 12 and emanating from the laser 90. The incident power on line 22 and the reflected power on line 24 are then applied, as mentioned hereinabove, to the emissivity calculation unit 26 for calculation of the emissivity of the wafer 12.

In the calculation of the emissivity by the unit 26, it is advantageous in the case of a wafer having a rough or non-perfectly smooth surface to increase the accuracy of the emissivity measurement by introducing the specularity (shown in Fig. 1) of the wafer 12 in the chamber 14 as a multiplicative factor. The specularity of the wafer 12 within the chamber 14 is measured prior to operation of the emissivity calculation unit 26, and is stored in the signal processor 28 for use by the emissivity calculation unit 26. Also stored in the signal processor 28 is the wavelength of the radiation at which the emissivity and the radiance are measured; this wavelength is employed by the temperature calculation unit 30 for determination of the temperature of the wafer 12.

While the use of spatial and angular filtering, as well as the use of wavelengths less than approximately two microns, reduces the photon flux to the detector 64 of Fig. 1, as compared to the photon flux produced by a longer wavelength radiation, the signal level at the detector 64 is still well above typical noise limits. For example, radiant power from a 1000 degree centigrade gray body with an emissivity of 0.5 in a 0.1 micron bandwidth for typical dimensions of th espacial filter is about 2 microwatts compared to a noise level of about $10^{-10}$ watts.

The emissivity calculation unit 26 is operative to provide the emissivity by solving the following equation

$$\in = 1 - r$$

where $\in$ is emissivity, and $r$ is hemispherical reflectance.

The temperature calculation unit 30 is operative to provide the temperature by solving the following equation.

$$R_\lambda = \frac{\in_\lambda (C_1)}{\lambda^5 (e^{c_2/\lambda T} - 1)}$$

where

$R_\lambda$ is radiance

T is temperature

$\lambda$ is wavelength

$\in_\lambda$ is emissivity

It is to be understood that the above described embodiment of the invention is illustrative only, and that modifications thereof may occur to those skilled in the art. Accordingly, this invention is not to be regarded as limited to the embodiments disclosed herein, but is to be limited only as defined by the appended claims.

**Claims**

1. A system for measuring radiance of an object located in an environment of background radiation, the background radiation lying within a spectral band, the object and the background radiation being disposed within a chamber, the system comprising:

   a detector of radiant energy emitted by said object in said spectral band, said detector being located outside of said chamber and positioned for receipt of radiant energy propagating along an optical path from a surface element of the object; and

   angular filtering means located on said optical path for inhibiting propagation of rays of said background radiation to said detector in a direction inclined to said optical path.

2. A system according to Claim 1 wherein said angular filtering means includes baffle means comprising a plurality of baffle plates oriented transversely of said optical path and having apertures positioned on said optical path, one of said baffle plates being an iris positioned adjacent said detector, an aperture of said iris being smaller than an aperture of another one of said baffle plates.

3. A system according to Claim 2 further comprising a lens located between said iris and another one of said baffle plates for focussing rays of radiant energy through said iris to impinge upon said detector, and a filter located on said optical path and having a passband for passing radiation at a designated wavelength while inhibiting passage of radiation at a wavelength different form said designated wavelength.

4. A system according to Claim 3 wherein a length of said optical path within said baffle means is greater by at least an order of magnitude than a diameter of an aperture in one of said baffle plates.

5. A system according to Claim 4 wherein said system is operative with a heating assembly comprising heating elements producing said background radiation for heating the object within said chamber, at least a portion of the chamber being transparent to radiation at said designated wavelength, said heating assembly including a mirror for reflecting radiant energy emitted by said heating elements to said object upon insertion of said object into said chamber, said mirror having an aperture located on said optical path, said optical path being offset from individual ones of said heating elements to avoid illumination of said detector wit said background radiation;
said object is a semiconductor wafer, and said baffle means is located outside of said heating assembly.

6. A method for measuring radiance of an object located in an environment of background radiation, the background radiation lying within a spectral band, the object and the background radiation being disposed within a chamber, the method comprising steps of:

   positioning a detector for detecting radiant energy emitted by said object in said spectral band and propagating along an optical path from a surface element of the object to said detector;

   locating an angular filtering assembly along said optical path between said object and said detector for inhibiting propagation of rays of said background radiation to said detector in a direction inclined to said optical path.

7. A method according to Claim 6 wherein said locating step includes arranging in said angular filtering assembly a lens and an iris on said optical path, and positioning said iris between said lens and said detector.

8. A method according to Claim 6 wherein said locating step includes arranging in said angular filtering assembly a series of baffle plates along said optical path between said object and said detector for inhibiting propagation of rays of radiant energy to said detector in a direction inclined to said optical path, each of said baffle plates having an aperture; and
aligning said apertures of said baffle plates with said optical path to allow propagation of radiant energy along said optical path through said apertures.

9. A system for measuring temperature of an object located in an environment of background radiation, the background radiation and radiance of the object lying within a common spectral band, the object and the background radiation being disposed within a chamber, comprising:

radiance means for measuring radiance of said object, said radiance means including a detector of radiant energy emitted by said object, said detector being positioned for receipt of radiant energy propagating along an optical path from a surface element of the object, wherein said radiance means further comprises angular filtering means extending along said optical path for inhibiting propagation of rays of the background radiation to said detector in a direction inclined to said optical path; and

reflectance means for measuring reflectance of said object, and signal processing means responsive to both said reflectance and said radiance for determining temperature of said object.

10. A system according to Claim 10 or 9 wherein said angular filtering means includes baffle means comprising a plurality of baffle plates oriented transversely of said optical path, each of said baffle plates having an aperture positioned at said optical path to allow propagation of radiant energy along said optical path through said aperture.

11. A system according to Claim 1 or 9 wherein said angular filtering means includes a lens located on said optical path and an iris located on said optical path between said lens and said detector to provide a narrow acceptance angle to radiation incident upon said detector.

12. A system according to Claim 9 wherein said angular filtering means includes baffle means comprising a plurality of baffle plates oriented transversely of said optical path and having apertures positioned on said optical path, one of said baffle plates being an iris positioned adjacent said detector, an aperture of said iris being smaller than an aperture of another one of said baffle plates.

13. A system according to Claim 12 wherein said reflectance means comprises:

means for illuminating a surface element of said object with an incident laser beam, said object being reflective to radiation of said incident beam to provide a reflected beam in response to illumination by said incident beam;

means for chopping said incident beam, and means for measuring power of said incident beam; and

means synchronized with said chopping means for sensing power of said reflected beam, a ratio of the reflected beam power to the incident beam power constituting said reflectance; and said signal processing means comprises:

means responsive to said incident beam power and to said reflected beam power for calculating emissivity of said object; and

means responsive to said emissivity and to said radiance for calculating the temperature of said object.

14. An apparatus for non-contact in-situ temperature measurement of a surface of a workpiece in a radiative environment, the radiative environment characterized by irradiation with radiation of a radiant source, the radiative environment further characterized by a chamber in which the workpiece is positioned wherein the chamber has walls transparent to a spectral band of interest for the temperature measurement, a plane of the workpiece surface being substantially parallel to a plane of the radiant source, the radiative environment further comprising a reflective surface generally parallel to the workpiece surface and disposed on a side of said radiant source opposite said workpiece, said apparatus comprising:

means for measuring the emissivity of the workpiece from a first location of the workpiece surface at a first wavelength and providing an emissivity measurement signal, the first wavelength being within a spectrally transparent region of said chamber walls, said emissivity measuring means being external to said chamber;

means for measuring the radiance of said workpiece at a second wavelength and providing a radiance measurement signal wherein said second wavelength is substantially equal to said first wavelength, said radiance measuring means having a detector of radiant energy positioned externally to said chamber, said radiance measuring means including means for angularly filtering rays of said source radiation accompanying rays of said radiance to substantially exclude the rays of said source radiation from a measurement of the radiance; and

temperature means for generating a workpiece surface temperature from said emissivity measurement signal and said radiance measurement signal.

FIG. 1

FIG. 2

**European Patent Office**

# EUROPEAN SEARCH REPORT

Application Number

EP 95 48 0143

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 919 542 (NULMAN JAIM ET AL) 24 April 1990 | 1 | G01J5/06 |
| A | * the whole document * | 9 | |
| Y | PATENT ABSTRACTS OF JAPAN vol. 12 no. 170 (P-705) [3017] ,20 May 1988 & JP-A-62 282231 (KYOCERA CORP) 8 December 1987, | 1 | |
| A | * abstract * | 2-4 | |
| A | PATENT ABSTRACTS OF JAPAN vol. 005 no. 201 (P-094) ,19 December 1981 & JP-A-56 122924 (TAKADA HIDEO) 26 September 1981, * abstract * | 9 | |
| A | US-A-5 156 461 (MOSLEHI MEHRDAD M ET AL) 20 October 1992 * figures 6,12 * | 1,3 | |
| A | PATENT ABSTRACTS OF JAPAN vol. 11 no. 248 (P-604) [2695] ,13 August 1987 & JP-A-62 055529 (KHENSU K.K.) 11 March 1987, * abstract * | 2,3 | TECHNICAL FIELDS SEARCHED (Int.Cl.6) G01J |

The present search report has been drawn up for all claims

| Place of search | Date of completion of the search | Examiner |
|---|---|---|
| THE HAGUE | 6 February 1996 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)